Europäisches Patentamt

European Patent Office

Office européen des brevets

(11) Publication number: **0 133 352**
**B1**

(12) EUROPEAN PATENT SPECIFICATION

(45) Date of publication of patent specification: 06.05.87

(51) Int. Cl.⁴: **B 01 J 13/02,** B 41 M 5/00

(21) Application number: **84305001.4**

(22) Date of filing: **24.07.84**

(54) **A process for manufacturing microcapsules.**

(30) Priority: **26.07.83 US 517296**
**12.06.84 US 619967**

(43) Date of publication of application:
**20.02.85 Bulletin 85/08**

(45) Publication of the grant of the patent:
**06.05.87 Bulletin 87/19**

(84) Designated Contracting States:
**AT BE CH DE FR GB IT LI NL SE**

(56) References cited:
**DE-A-2 832 637**
**DE-A-3 008 658**
**FR-A-2 416 727**
**GB-A-1 246 031**

(73) Proprietor: **APPLETON PAPERS INC.**
**P.O. Box 359 825 East Wisconsin Avenue**
**Appleton Wisconsin 54912 (US)**

(72) Inventor: **Brown, Robert W.**
**91 Esterbrook Court**
**Appleton, WI 54915 (US)**
Inventor: **Bowman, Richard P.**
**1614 E. Harding Drive, Apt. 8**
**Appleton, WI 54915 (US)**

(74) Representative: **Norris, Richard John**
**The Wiggins Teape Group Limited Group**
**Patents Departement Butlers Court**
**Beaconsfield Buckinghamshire HP9 1RT (GB)**

Courier Press, Leamington Spa, England.

**Description**

The present invention relates to a process for manufacturing microcapsules having walls of urea- or melamine-formaldehyde polymeric materials. The microcapsules are particularly but not exclusively for use in pressure-sensitive copying materials.

One type of pressure-sensitive copying system is disclosed in US—A—2,730,456 and is commonly referred to as a manifold copying system. This manifold copying system comprises an upper sheet coated on its lower surface with microcapsules containing a solution of a colourless chromogenic material, and a lower sheet coated on its upper surface with a colour developing coreactant material, e.g. an acidic clay, a phenolic resin or certain organic salts. When more than two plies are required in the record material to produce a greater number of copies, a number of intermediate sheets are also provided, each of which is coated on the lower surface with microcapsules containing colourless chromogenic material and on the upper surface with the colour developing coreactant material. Pressure exerted on the sheets by writing or typing ruptures the microcapsules, thereby releasing the chromogenic material solution on to the coreactant material on the next lower sheet and giving rise to a chemical reaction which develops the colour of the chromogenic material. The upper sheet in such a system is known as a CB sheet (CB=*C*oated *B*ack) and the lower sheet as a CF sheet (CF=*C*oated *F*ront). The intermediate sheets are known as CFB sheets (CFB=*C*oated *F*ront and *B*ack).

Another type of pressure-sensitive copying system is known as a self-contained system and is disclosed in US—A—2,730,457 and US—A—4,197,346. A coreactant material and microcapsules containing a chromogenic material solution are coated on the same surface of a sheet of paper. Pressure exerted on the sheet by writing or typing causes the capsules to rupture and release the chromogenic material, which then reacts with the coreactant material on the sheet to produce a colour.

Microcapsules for use in the above-described pressure-sensitive copying systems have to meet a series of stringent property requirements. These requirements relate, for example, to capsule strength, colour, size distribution range and wall integrity (or impermeability). For many years, microcapsules produced by coacervation techniques using natural polymers such as gelatin were used in these copying systems, but in recent years there has been a strong trend towards the use of microcapsules having walls of synthetic polymers.

Thus several methods have been proposed for the manufacture of microcapsules having walls wholly or partly of urea- or melamine-formaldehyde polymeric material. For example US—A—4,001,140; US—A—4,087,376; and US—A—4,089,802 disclose a method of encapsulating by an in situ reaction of urea and formaldehyde or a polycondensation of monomeric or low molecular weight polymers of dimethylol urea or methylated dimethylol urea in an aqueous vehicle conducted in the presence of negatively-charged, carboxyl-substituted, linear aliphatic hydrocarbon polyelectrolyte material dissolved in the vehicle.

US—A—4,100,103 discloses a method of encapsulating by an in situ reaction of melamine and formaldehyde or a polycondensation of monomeric or low molecular weight polymers of methylol melamine or etherified methylol melamine in an aqueous vehicle conducted in the presence of negatively-charged, carboxyl-substituted linear aliphatic hydrocarbon polyelectrolyte material dissolved in the vehicle.

US—A—4,221,710 discloses a method for producing microcapsules having walls produced by polymerisation of urea and formaldehyde in the presence of gum arabic and, optionally, other anionic high molecular weight polyelectrolytes such as acrylic acid copolymers. Examples of acrylic acid copolymers listed are copolymers of acrylic acid and various alkyl acrylates including ethyl acrylate- and butyl acrylate-acrylic acid copolymers. The acrylic acid content of the acrylic acid copolymers listed by way of example is disclosed to be preferably about 5 to 100 mol %.

US—A—4,251,386 and US—A—4,356,109 both disclose methods for preparing microcapsules in which the walls are produced by polymerisation of urea and formaldehyde in the presence of an ammonium salt of an acid and an anionic polyelectrolyte such as an acrylic acid copolymer. Examples of acrylic acid copolymers listed are copolymers of acrylic acid and various alkyl acrylates, including ethyl acrylate- and butyl acrylate-acrylic acid copolymers. The acrylic acid content of the acrylic acid copolymers listed by way of example is disclosed to be preferably about 5 to 100 mol %.

The processes according to US—A—4,001,140; US—A—4,087,376; US—A—4,089,802 and US—A—4,100,103 have been successfully used to encapsulate solutions of chromogenic materials for use in pressure-sensitive copying papers. Of the eligible carboxyl-substituted polyelectrolytes disclosed in said patents, the hydrolyzed maleic anhydride copolymers are preferred. Among the hydrolyzed maleic anhydride copolymers disclosed, the most preferred is poly(ethylene-co-maleic anhydride) (hereinafter referred to as EMA) because of the balance of properties provided to the encapsulation process and the resulting microcapsules.

The cost of EMA has recently been rising rapidly, producing a consequent rise in the cost of the microcapsules manufactured by processes in which EMA constitutes the carboxyl-substituted polyelectrolyte. Because of cost and availability considerations, poly(acrylic acid) (hereinafter referred to as PAA), is a logical substitute for EMA as the carboxyl-substituted polyelectrolyte. While microcapsules made from processes according to US—A—4,001,140 and US—A—4,100,103, in which PAA constitutes the

2

polyelectrolyte, are of commercial quality for use in pressure-sensitive copying paper, they do not possess the optimum balance of properties obtained when EMA is utilized.

One function of the polyelectrolyte in the processes just referred to is to take an active part in the control or moderation of the polymerization reaction of the starting materials used to form the condensation polymer which makes up the resulting capsule walls.

Another function of the polyelectrolyte is to act as an emulsifying agent to promote and maintain the separation of the individual droplets of the intended capsule core material in the aqueous manufacturing vehicle. When PAA is utilized as the polyelectrolyte, emulsification of the intended capsule core material requires more energy input and time and produces a poorer drop size distribution than when EMA is employed. The poorer emulsifying power of PAA can be offset in the case of the process of US—A—4,100,103 by mixing in, prior to emulsification, the starting materials (e.g. methylated methylol melamine) employed in the in situ polymerization reaction to form the condensation polymer which makes up the resulting capsule walls. The presence of methylated methylol melamine or a low molecular weight polymer thereof (hereinafter referred to as MMM) during the intended core material emulsification step can result in the premature polymerization of the MMM. This tendency of the MMM to prematurely react under these circumstances may be reduced by raising the pH of the PAA-MMM solution to the highest level at which emulsification of the intended core material can be obtained. Once a satisfactory intended core material emulsion is obtained, the pH of the emulsion must be reduced in order to obtain the deposition of satisfactory capsule walls in a reasonable amount of time. This process has been further improved by the addition of certain salts as disclosed in US—A—4,444,699. Also the use of PAA as the polyelectrolyte in combination with polystyrene sulphonic acid or a salt thereof in which the polystyrene sulphonic acid is present in a certain range of relative amount has been disclosed in our copending EP—A—84 300195.9.

It is an object of the present invention to provide a microcapsule manufacturing process of the kind generally disclosed in US—A—4,001,140; US—A—4,087,376; US—A—4,089,802; or US—A—4,100,103 in which the drawbacks of PAA or other non-preferred polyelectrolytes may be avoided and which does not require the use of expensive EMA for the achievement of good process characteristics and excellent capsule properties.

It has now been found that when an acrylic acid-alkyl acrylate copolymer is used as the polyelectrolyte in a process as generally disclosed in US—A—4,001,140; US—A—4,087,376; US—A—4,089,802; or US—A—4,100,103, there is a critical range of alkyl acrylate content in the copolymer which gives rise to enhanced performance and benefits compared with alkyl acrylate contents outside the critical range (the critical range of alkyl acrylate content varies somewhat, depending on the particular alkyl acrylate used). The existence of a critical range of alkyl acrylate content is unexpected and surprising and is not taught by the prior art. Thus the aforementioned US—A—4,221,710; US—A—4,251,386; and US—A—4,356,109, which teach the use of acrylic acid-alkyl acrylate copolymers, disclose only a very broad range of acrylic acid content in the copolymer (about 5 to 100 mol %). By implication therefore, they teach a correspondingly broad range of alkyl acrylate content, i.e. up to about 95 mol %. Even the broad range of acrylic acid content taught in these patents is diclosed as merely being preferred. It can be concluded therefore that these patents show no awareness nor appreciation that there exists a certain critical range of alkyl acrylate content for the achievements of enhanced performance and benefits.

In assessing the extent to which the enhanced performance and benefits referred to above were obtained, one or more of the following criteria were employed:—

(1) Ability of the copolymer to give an emulsion of intended capsule core material of acceptable drop size distribution.

(2) Resistance of said emulsion to destabilization during addition of the starting materials for capsule wall formation.

(3) Resistance of said emulsion to destabilization during the course of the encapsulation process.

(4) Impermeability of the resulting microcapsules.

Applying these criteria, it was found that acrylic acid-alkyl acrylate copolymers as defined in Table 1 below afforded enhanced performance and benefits:—

**0 133 352**

TABLE 1

| Type of alkyl acrylate in acrylic acid-alkyl acrylate copolymer | Weight percent of alkyl acrylate in copolymer |
| --- | --- |
| ethyl acrylate | 12 to 30 |
| propyl acrylate | 6 to 14 |
| butyl acrylate | 4 to 20 |
| amyl acrylate | 2 to 14 |
| hexyl acrylate | 2 to 10 |
| cyclohexyl acrylate | 4 to 12 |
| 2-ethylhexyl acrylate | 2 |

Accordingly, the present invention provides in a first aspect a process for manufacturing microcapsules comprising the steps of:

(a) establishing a dispersion of particles or droplets of a substantially insoluble capsule nucleus material in an aqueous manufacturing vehicle containing:

(i) a capsule wall precursor material selected from melamine and formaldehyde; monomeric or low molecular weight polymers of methylol melamine or methylated methylol melamine; urea and formaldehyde; monomeric or low molecular weight polymers of dimethylol urea or methylated dimethylol urea; or any combination of the foregoing; and

(ii) an acrylic acid-alkyl acrylate copolymer; and

(b) forming polymeric shells individually surrounding the particles of capsules nucleus material from the capsule wall precursor material by in situ polymerisation;
characterised in that the acrylic acid-alkyl acrylate copolymer comprises an acrylic acid-ethyl acrylate copolymer containing 12 to 30% by weight ethyl acrylate; an acrylic acid-propyl acrylate copolymer containing 6 to 14% by weight propyl acrylate; an acrylic acid-butyl acrylate copolymer containing 4 to 20% by weight butyl acrylate; an acrylic acid-amyl acrylate copolymer containing 2 to 14% by weight amyl acrylate; an acrylic acid-hexyl acrylate copolymer containing 2 to 10% by weight hexyl acrylate; an acrylic acid-cyclohexyl acrylate copolymer containing 4 to 12% by weight cyclohexyl acrylate; or an acrylic acid-2-ethylhexyl acrylate copolymer containing 2% by weight 2-ethylhexyl acrylate.

In a second aspect, the present invention provides microcapsules manufactured by the process of the present invention.

In a third aspect, the present invention provides sheet material carrying microcapsules manufactured according to the process of the present invention.

Of the capsule wall precursor materials referred to above, methylated methylol melamine is most preferred, followed by urea and formaldehyde. Further information on suitable capsule wall precursor materials may be found in US—A—4,001,140; US—A—4,087,376; US—A—4,089,802; and US—A—4,100,103. Similarly the procedures used in the present process may be generally as described in those patents.

Reference should also be made to those patents for examples of suitable capsule core materials.

Preferably, the acrylic acid-alkyl acrylate copolymer is present in an amount in the range of 0.4 to 15% by weight of the aqueous manufacturing vehicle.

The present process is operable over a wide range of temperatures, but it is preferred that the polymerisation is conducted at a temperature in the range of 40°C to 95°C, more preferably 50°C to 70°C.

Of the acrylic acid-alkyl acrylate copolymers specified above for use in the present process, copolymers of the following characteristics are preferred:—

| Alkyl acrylate in copolymer weight | Preferred amount (% by weight) | Most preferred amount (% by weight) |
| --- | --- | --- |
| butyl acrylate | 6 to 10 | 8 |
| ethyl acrylate | 18 to 24 | 22 |
| hexyl acrylate | 2 to 6 | 4 |
| cyclohexyl acrylate | 4 to 6 | 4 |

4

**0 133 352**

Under certain circumstances the inclusion of one of the salts disclosed in the aforementioned US—A—4,444,699 provides a further improvement in the viscosity of the resulting microcapsule slurry. However, the use of such salts is not required to practice and obtain the beneficial properties of the claimed invention. Neither is the use of gum arabic or ammonium salts as disclosed in the aforementioend US—A—4,221,710; US—A—4,251,386; or US—A—4,356,189.

Resorcinol may also be present in the aqueous manufacturing vehicle.

The present invention permits the attainment of improved emulsification of intended capsule core material, improved droplet size distribution in the emulsion, and an enhanced resistance of said emulsion to destabilization during the course of the encapsulation process. The resulting capsules exhibit enhanced resistance to frictional smudge damage when used in a copying system and enhanced impermeability (frictional smudge damge is damage occurring as a result of relative movement between adjacent sheets of a copying system, e.g. during printing operations or handling of the product in use).

The present invention will now be illustrated by reference to the following Examples in which all parts and percentages are by weight and all solutions are aqueous unless otherwise specified.

The microcapsule core material for all of the following Examples was a solution of chromogenic compounds as shown in Table 2.

TABLE 2

| Concentration | Chromogenic material |
| --- | --- |
| 1.7% | 3,3-bis(p-dimethylaminophenyl)-6-dimethyl-aminophthalide |
| 0.55% | 2'-anilino-3'-methyl-6'-diethylaminofluoran |
| 0.55% | 3,3-bis(1-ethyl-2-methylindol-3-yl)phthalide |

The solvent for the preceding chromogenic compound solution was a mixture of 65 parts of a $C_{10}$—$C_{13}$ alkylbenzene and 35 parts of benzylated xylenes (US—A—4,130,299).

Examples 1—51

In each of Examples 1—51, the following general procedure was used. Into 153 g of a mixture of 149.5 g water and 3.5 g of alkyl acrylate-acrylic acid copolymer, adjusted to pH 5.0, were emulsified 180 g of the intended capsule core material solution of Table 2. A second mixture of 6.5 g of the corresponding copolymer and 65.0 g water was prepared and adjusted to pH 5.0 and 20 g of a partially methylated methylol melamine resin ("Resimene 714", 80% solids, Monsanto Company, St. Louis, Missouri) was added and this mixture was in turn added with stirring to the above-described emulsion. The resulting mixture was placed in a container which was mounted in a room temperature water bath, continuous stirring was provided and the bath was heated to 55°C and maintained at this temperature overnight to initiate and complete encapsulation.

The above procedure was substantially used for all Examples employiung the polymerisation of methylated methylol melamine resin as the capsule wall forming process with the following exceptions:

When ethyl acrylate-acrylic acid was the copolymer, the pH of the second mixture was adjusted to 4.0 rather than 5.0.

When propyl acrylate-acrylic acid, amyl acrylate-acrylic acid, cyclohexyl acrylate-acrylic acid and 2-ethylhexyl acrylate-acrylic acid were the copolymers, all ingredients were utilized at half the quantities specified in the general procedure and the water bath was heated to a temperature of 65°C rather than 55°C.

For each of the above Examples, the particle size was measured after emulsification, after addition of the mixture of the Resimene and additional copolymer and after completion of the encapsulation process. The particle size measurements were made both by a Microtrac Particle Size Analyser, (manufactured by Leeds and Northrup Instruments, St. Petersburg, Florida) and visually by means of a microscope. Both means were employed because, even though the Particle Size Analyser is very good at providing reliable particle size data for small sizes, it can fail to detect very large droplets which can be easily detected by means of a microscope.

A CF draw-down test, similar to that described in US—A—4,100,103, was employed to follow the course of the wall formation and to detect the presence of over-sized capsules. In the present Examples, the encapsulation emulsion containing all of the capsule-forming ingredients was coated onto a reactive CF sheet utilizing a gap-type applicator set at 75 µm wet film thickness. In this test, a colour is formed by the reaction of the chromogenic material with the coreactant material of the CF sheet. Capsule wall formation is demonstrated by the mitigation of the colour when the emulsion is coated at a later time and is measured by an opacimeter to give the reflectance of the coated area. This same test provides a means of detecting over-sized capsules which appear as blue specks, visible to the naked eye, upon drying of the emulsion.

Listed in Table 3 are Examples 1—51 and the corresponding type of acrylic acid-alkyl acrylate copolymer and weight percent of the respective alkyl acrylate in the copolymer.

5

0 133 352

## TABLE 3
### Alkyl group in alkyl acrylate of copolymer

| | Ethyl | Propyl | Butyl | Amyl | Hexyl | Cyclohexyl | 2-ethylhexyl |
|---|---|---|---|---|---|---|---|
| Example number and corresponding weight percent alkyl acrylate in copolymer | Ex. 1, 10% | Ex. 10, 5% | Ex. 17, 2% | Ex. 27, 1% | Ex. 36, 1% | Ex. 43, 2% | Ex. 49, 1% |
| | Ex. 2, 12% | Ex. 11, 6% | Ex. 18, 4% | Ex. 28, 2% | Ex. 37, 2% | Ex. 44, 4% | Ex. 50, 2% |
| | Ex. 3, 14% | Ex. 12, 8% | Ex. 19, 6% | Ex. 29, 4% | Ex. 38, 4% | Ex. 45, 6% | Ex. 51, 3% |
| | Ex. 4, 18% | Ex. 13, 10% | Ex. 20, 8% | Ex. 30, 6% | Ex. 39, 6% | Ex. 46, 8% | |
| | Ex. 5, 22% | Ex. 14, 12% | Ex. 21, 10% | Ex, 31, 8% | Ex. 40, 8% | Ex. 47, 12% | |
| | Ex. 6, 24% | Ex. 15, 14% | Ex. 22, 12% | Ex. 32, 10% | Ex. 41, 10% | Ex. 48, 16% | |
| | Ex. 7, 26% | Ex. 16, 16% | Ex. 23, 14% | Ex. 33, 12% | Ex. 42, 12% | | |
| | Ex. 8, 30% | | Ex. 24, 16% | Ex. 34, 14% | | | |
| | Ex. 9, 35% | | Ex. 25, 20% | Ex. 35, 18% | | | |
| | | | Ex. 26, 24% | | | | |

In Table 4 are listed the performance results of Examples 1—51 as determined by the previously-described particle size measurements and CF draw-down test. From these results, the critical range of alkyl acrylate content for each copolymer can be determined.

TABLE 4

Percent by weight of alkyl acrylate in copolymer

| Alkyl acrylate of copolymer | 1 | 2 | 3 | 4 | 5 | 6 | 8 | 10 | 12 | 14 | 16 | 18 | 20 | 22 | 24 | 26 | 30 | 35 |
|---|---|---|---|---|---|---|---|---|---|---|---|---|---|---|---|---|---|---|
| Ethyl | | | | | | | | | D | E | E | | E | | E | E | E | E | A |
| Propyl | | | | | | B | E | E | E | E | E | E | B | | | | | |
| Butyl | | | C | | E | | E | E | E | E | E | E | | E | | A | | |
| Amyl | | B | E | | E | | E | E | E | E | E | | C | | | | | |
| Hexyl | | C | E | | E | | E | E | E | C | | | | | | | | |
| Cyclohexyl | | | C | | E | | E | E | | E | | C | | | | | | |
| 2-Ethylhexyl | C | E | C | | | | | | | | | | | | | | | |

Key:
A—Unacceptable emulsion.
B—Acceptable emulsion, but unacceptable size change when Resimene solution added.
C—Acceptable emulsion, but unacceptable size change during encapsulation.
D—Acceptable emulsion, but unacceptable encapsulation due to poor wall formation.
E—Acceptable emulsion and acceptable encapsulation.

Certain of Examples 1—51 were individually mixed with ethoxylated corn starch binder and uncooked wheat starch granules according to the dry proportions listed below and sufficient water was added to make a 20% solids dispersion.

| Parts dry | Material |
|---|---|
| 50 | capsules |
| 5 | ethoxylated corn starch |
| 12.5 | wheat starch granules |

The dispersion was coated on a 50 $gm^{-2}$ paper base with a No. 12 wire-wound coating rod and dried. The resulting CB sheets were each tested in Typewriter Intensity (TI) and Oven Decline tests as described below.

For the TI test, a CF sheet bearing a coating comprising an oil-soluble metal salt of a phenolformaldehyde novolak resin, made by procedures described in US—A—3,732,120 and US—A—3,455,721, was employed. In the TI test a standard pattern is typed on a coated side-to-coated side CB-CF pair. After the image develops twenty minutes, the intensity is measured by a reflectance method. The reflectance of the typed area is a measure of colour development on the CF sheet and is reported as the ratio ($I/I_o$) of the reflectance of the typed area (I) to that of the background reflectance ($I_o$) of the CF paper, expressed as a percentage. A high value indicates little colour development and a low value indicates good colour development.

The Oven Decline test is a related test concerning capsule quality and is the degree of loss of ability of capsule-coated paper to produce transfer prints in a typewriter test after storage of the coated paper in an oven at a specified temperature for a specified time. It is useful to perform a Ti test with a CB/CF couplet, placing the CB in a 100°C. oven for 16 hours and then re-imaging the couplet after storage. This test has consistently shown that poor capsules will lose most or all of their ability to make a transfer print during such oven storage and that good capsules will withstand this storage with little or no loss in ability to give a print.

As evidenced by the data in Table 5, all of the CB sheets tested demonstrate good capsule quality through the retention of the ability of the CB sheets to produce a good TI image intensity after oven storage.

# 0 133 352

## TABLE 5

| Ex. No. | Alkyl acrylate of copolymer | | Typewriter intensity | |
|---|---|---|---|---|
| | Weight percent | Type | Before oven storage | After oven storage |
| 3 | 14 | Ethyl | 53 | 55 |
| 6 | 24 | Ethyl | 53 | 54 |
| 11 | 6 | Propyl | 53 | 55 |
| 12 | 8 | Propyl | 55 | 57 |
| 13 | 10 | Propyl | 53 | 55 |
| 14 | 12 | Propyl | 54 | 56 |
| 15 | 14 | Propyl | 54 | 55 |
| 19 | 6 | Butyl | 51 | 56 |
| 20 | 8 | Butyl | 46 | 50 |
| 21 | 10 | Butyl | 52 | 55 |
| 22 | 12 | Butyl | 50 | 54 |
| 28 | 2 | Amyl | 53 | 55 |
| 29 | 4 | Amyl | 56 | 58 |
| 30 | 6 | Amyl | 57 | 59 |
| 31 | 8 | Amyl | 55 | 58 |
| 32 | 10 | Amyl | 54 | 56 |
| 33 | 12 | Amyl | 60 | 64 |
| 34 | 14 | Amyl | 53 | 56 |
| 37 | 2 | Hexyl | 56 | 59 |
| 38 | 4 | Hexyl | 55 | 58 |
| 39 | 6 | Hexyl | 55 | 56 |
| 40 | 8 | Hexyl | 55 | 58 |
| 41 | 10 | Hexyl | 56 | 59 |
| 44 | 4 | Cyclohexyl | 54 | 56 |
| 45 | 6 | Cyclohexyl | 54 | 56 |
| 46 | 8 | Cyclohexyl | 53 | 57 |
| 50 | 2 | 2-Ethylhexyl | 53 | 56 |

Examples 52—57

In Examples 52—57, a series of encapsulation experiments, similar to Examples 1—51, was performed except that a different capsule wall formation process was utilised. In each of Examples 52—57, the following general procedure was used. Into a mixture of 89.5 g of water, 5 g of urea, 0.5 g of resorcinol und

8

5 g of an alkyl acrylate-acrylic acid copolymer, adjusted to pH 4.0, were emulsified 90 g of the intended capsule core material solution of Table 2. These mixtures were emulsified and the resulting mixture was placed in a container which was mounted in a room temperature water bath, continuous stirring was provided, 13.5 g of 37% formaldehyde solution were added and the bath was heated to 55°C and maintained at that temperature overnight to initiate and complete encapsulation.

The resulting capsule batches, which were all found to be successful for particle size determination tests, were formulated into CB sheets as previously described (supra) and these CB sheets were utilized in TI and Oven Decline tests as previously described (supra). The results of the TI and Oven Decline tests are entered in Table 6.

TABLE 6

| Ex. No. | Alkyl acrylate of copolymer | | Typewriter intensity | |
| | Weight percent | Type | Before oven storage | After oven storage |
| --- | --- | --- | --- | --- |
| 52 | 18 | Ethyl | 56 | 56 |
| 53 | 8 | Propyl | 59 | 59 |
| 54 | 6 | Amyl | 57 | 57 |
| 55 | 8 | Hexyl | 54 | 54 |
| 56 | 4 | Cyclohexyl | 56 | 56 |
| 57 | 2 | 2-Ethylhexyl | 55 | 56 |

The results of the TI and Oven Storage tests provide further evidence of the efficacy of various alkyl acrylate-acrylic acid copolymers when employed in a process for preparing microcapsules wherein the polymeric shells are produced by in situ polymerization of urea and formaldehyde.

**Claims**

1. A process for manufacturing microcapsules comprising the steps of:

(a) establishing a dispersion of particles or droplets of a substantially insoluble capsule nucleus material in an aqueous manufacturing vehicle containing:

(i) a capsule wall precursor material selected from melamine and formaldehyde; monomeric or low molecular weight polymers of methylol melamine or methylated methylol melamine; urea and formaldehyde; monomeric or low molecular weight polymers of dimethylol urea or methylated dimethylol urea; or any combination of the foregoing; and
(ii) an acrylic acid-alkyl acrylate copolymer; and

(b) forming polymeric shells individually surrounding the particles of capsule nucleus material from the capsule wall precursor material by in situ polymerisation;

characterised in that the acrylic acid-alkyl acrylate copolymer comprises an acrylic acid-ethyl acrylate copolymer containing 12 to 30% by weight ethyl acrylate; an acrylic acid-propyl acrylate copolymer containing 6 to 14% by weight propyl acrylate; an acrylic acid-butyl acrylate copolymer containing 4 to 20% by weight butyl acrylate; an acrylic acid-amyl acrylate copolymer containing 2 to 14% by weight amyl acrylate; an acrylic acid-hexyl acrylate copolymer containing 2 to 10% by weight hexyl acrylate; an acrylic acid-cyclohexyl acrylate copolymer containing 4 to 12% by weight cyclohexyl acrylate; or an acrylic acid-2-ethylhexyl acrylate copolymer containing 2% by weight 2-ethylhexyl acrylate.

2. A process as claimed in claim 1, characterized in that the acrylic acid-alkyl acrylate copolymer is present in an amount in the range of 0.4 to 15% percent by weight of the aqueous manufacturing vehicle.

3. A process as claimed in claim 1 or claim 2, characterized in that the polymerization is connected at a temperature in the range of 40°C to 95°C.

4. A process as claimed in claim 3, characterized in that the polymerisation is conducted at a temperature in the range of 50°C to 70°C.

5. A process as claimed in any preceding claim, characterized in that the acrylic acid-alkyl acrylate copolymer is an acrylic acid-butyl acrylate copolymer containing 6 to 10% by weight butyl acrylate.

6. A process as claimed in claim 5, characterized in that the acrylic acid-butyl acrylate copolymer contains 8% by weight butyl acrylate.

9

7. A process as claimed in any of claims 1 to 4, characterized in that the acrylic acid-alkyl acrylate copolymer is an acrylic acid-ethyl acrylate copolymer containing 18 to 24% by weight ethyl acrylate.

8. A process as claimed in claim 7, characterized in that the acrylic acid-ethyl acrylate copolymer contains 22% by weight ethyl acrylate.

9. A process as claimed in any of claims 1 to 4, characterized in that the acrylic acid-alkyl acrylate copolymer is an acrylic acid-hexyl acrylate copolymer containing 2 to 6% by weight hexyl acrylate.

10. A process as claimed in claim 9, characterized in that the acrylic acid-hexyl acrylate copolymer contains 4% by weight hexyl acrylate.

11. A process as claimed in any of claims 1 to 4, characterized in that the acrylic acid-alkyl acrylate copolymer is an acrylic acid-cyclohexyl acrylate copolymer containing 4 to 6% by weight cyclohexyl acrylate.

12. A process as claimed in claim 11, characterized in that the acrylic acid-cyclohexyl acrylate copolymer contains 4% by weight cyclohexyl acrylate.

13. A process as claimed in claim 1, characterized in that resorcinol is also present in said aqueous manufacturing vehicle.

14. A sheet material carrying microcapsules manufactured by a process as claimed in any preceding claim.

**Patentansprüche**

1. Verfahren zur Herstellung von Mikrokapseln, umfassend die Schritte von
(a) Bereitstellen einer Dispersion von Partikeln oder Tropfen eines im wesentlichen unlöslichen Kapselkernmaterials in einem wäßrigen Herstellungsvehikel enthaltend:

(i) ein Vorstufenmaterial für die Kapselwand, ausgewählt aus Melamin und Formaldehyd, monomerer oder niedermolekularer Polymere von Methylolmelamin oder methyliertem Methylolmelamin, Harnstoff und Formaldehyd, monomere und niedermolekulare Polymere von Dimethylolharnstoff oder methyliertem Dimethylolharnstoff oder einer Kombination davon und

(ii) einem Acrylsäure-Alkylacrylatcopolymer und

(b) dem Ausbilden von polymeren Hüllen, die die Partikel aus Kapselkernmaterial individuell umgeben, aus dem Vorstuffenmaterial der Kapselwand durch eine in situ Polymerisation

dadurch gekennzeichnet, daß das Acrylsäure-Alkylacrylatcopolymer ein Acrylsäure-Ethylacrylatcopolymer, das 12 bis 30 Gew.-% Ethylacrylat enthält, einem Acrylsäure-Propylacrylatcopolymer, das 6 bis 14 Gew.-% Propylacrylat enthält, einem Acrylsäure-Butylacrylatcopolymer, das 4 bis 20 Gew.-% Butylacrylat enthält, einem acrylsäure-Amylacrylatcopolymer, das 2 bis 14 Gew.-% Amylacrylat enthält, einem Acrylsäure-Hexylacrylatcopolymer, das 2 bis 10 Gew.-% Hexylacrylat enthält, einem Acrylsäure-Cyclohexylacrylatcopolymer, das 4 bis 12 Gew.-% Cyclohexylacrylat enthält oder ein Acrylsäure-2-ethylhexylacrylat-copolymer, das 2 Gew.-% 2-Ethyl-hexylacrylat enthält, umfaßt.

2. Verfahren nach Anspruch 1, dadurch gekennzeichnet, daß das Acrylsäure-Alkylacrylatcopolymer in einer Menge von 0,4 bis 15 Gew.-% des wäßrigen Herstellungsvehikels vorhanden ist.

3. Verfahren nach Anspruch 1 oder 2, dadurch gekennzeichnet, daß die Polymerisation bei einer Temperature von 40°C bis 95°C durchgeführt wird.

4. Verfahren nach Anspruch 3, dadurch gekennzeichnet, daß die Polymerisation bei einer Temperatur von 50 bis 70°C durchgeführt wird.

5. Verfahren nach einem der vorhergehenden Ansprüche, dadurch gekennzeichnet, daß das Acrylsäure-Alkylatcopolymer ein Acrylsäure-Butylacrylatcopolymer ist, das 6 bis 10 Gew.-% Butylacrylat enthält.

6. Verfahren nach Anspruch 5, dadurch gekennzeichnet, daß das Acrylsäure-Butylacrylat-Copolymer 8 Gew.-% Butylacrylat enthält.

7. Verfahren nach einem der Ansprüche 1 bis 4, dadurch gekennzeichnet, daß das Acrylsäure-Alkylacrylatcopolymer ein Acrylsäure-Ethylacrylatcopolymer ist, das 18 bis 24 Gew.-% Ethylacrylat enthält.

8. Verfahren nach Anspruch 7, dadurch gekennzeichnet, daß das Acrylsäure-Ethylacrylatcopolymer 22 Gew.-% Ethylacrylat enthält.

9. Verfahren nach einem der Ansprüche 1 bis 4, dadurch gekennzeichnet, daß das Acrylsäure-Alkylacrylatcopolymer ein Acrylsäurehexylacrylatcopolymer ist, das 2 bis 6 Gew.-% Hexylacrylat enthält.

10. Verfahren nach Anspruch 9, dadurch gekennzeichnet, daß das Acrylsäure-hexylacrylatcopolymer 4 Gew.-% Hexylacrylat enthält.

11. Verfahren nach einem der Ansprüche 1 bis 4, dadurch gekennzeichnet, daß das Acrylsäure-Alkylacrylatcopolymer ein Acrylsäure-Cyclohexylacrylatcopolymer ist, das 4 bis 6 Gew.-% Cyclohexylacrylat enthält.

12. Verfahren nach Anspruch 11, dadurch gekennzeichnet, daß das Acrylsäurecyclohexylacrylatcopolymer 4 Gew.-% Cyclohexylacrylat enthält.

**0 133 352**

13. Verfahren nach Anspruch 1, dadurch gekennzeichnet, daß in dem wäßrigen Herstellungsvehikel Resorzinol enthalten ist.

14. Ein Blattmaterial, das Mikrokapseln enthält, die nach einem der Verfahren der vorhergehenden Ansprüche hergestellt sind.

## Revendications

1. Procédé de fabrication de microcapsules comprenant les étapes consistant à:

(a) former une dispersion de particules ou de gouttelettes d'un matériau central de capsules, pratiquement insoluble, dans un véhicule de fabrication aqueux contenant:

(i) un matériau précurseur de parois de capsule sélectionné parmi la mélamine et le formaldéhyde; les monomères ou polymères de faible poids moléculaire de méthylol mélamine ou de méthylol mélamine méthylée; l'urée et le formaldehyde; les monomères ou polymères de faible poids moléculaire de la diméthylol urée ou de la diméthylol urée méthylée; ou toutes combinaisons des composés précédents; et

(ii) un copolymère acide acrylique-acrylate d'alkyle; et

(b) à former des coquilles de polymère entourant individuellement les particules du matériau central des capsules, à partir du matériau précurseur des parois de capsules, par polymérisation in situ;

caractérisé en ce que le copolymère acide acrylique-acrylate d'alkyle comprend un copolymère acide acrylique-acrylate d'éthyle contenant 12 à 30% en poids d'acrylate d'éthyle; un copolymère acide acrylique-acrylate de propyle contenant 6 à 14% en poids d'acrylate de propyle; un copolymère acide acrylique-acrylate de butyle contenant 4 à 20% en poids d'acrylate de butyle; un copolymère acide acrylique-acrylate d'amyle contenant 2 à 14% en poids d'acrylate d'amyle; un copolymère acide acrylique-acrylate d'hexyle contenant 2 à 10% en poids d'acrylate d'hexyle; un copolymère acide acrylique-acrylate de cyclohexyle contenant 4 à 12% en poids d'acrylate de cyclohexyle; ou un copolymère acide acrylique-acrylate de 2-éthylhexyle contenant 2% en poids d'acrylate de 2-éthylhexyle.

2. Procédé selon la revendication 1, caractérisé en ce que le copolymère acide acrylique-acrylate d'alkyle est présent dans une proportion de 0,4 à 15% en poids du véhicule de fabrication aqueux.

3. Procédé selon la revendication 1 ou 2, caractérisé en ce que la polymérisation est conduite à une température dans la gamme de 40°C à 95°C.

4. Procédé selon la revendication 3, caractérisé en ce que la polymérisation est conduite à une température dans la gamme de 50°C à 70°C.

5. Procédé selon l'une quelconque des revendications précédentes, caractérisé en ce que le copolymère acide acrylique-acrylate d'alkyle est un copolymère acide acrylique-acrylate de butyle contenant 6 à 10% en poids d'acrylate de butyle.

6. Procédé selon la revendication 5, caractérisé en ce que le copolymère acide acrylique-acrylate de butyle contient 8% en poids d'acrylate de butyle.

7. Procédé selon l'une quelconque des revendications 1 à 4, caractérisé en ce que le copolymère acide acrylique-acrylate d'alkyle est un copolymère acide acrylique-acrylate d'éthyle contenant 18 à 24% en poids d'acrylate d'éthyle.

8. Procédé selon la revendication 7, caractérisé en ce que le copolymère acide acrylique-acrylate d'éthyle contient 22% en poids d'acrylate d'éthyle.

9. Procédé selon l'une quelconque des revendications 1 à 4, caractérisé en ce que le copolymère acide acrylique-acrylate d'alkyle est un copolymère acide acrylique-acrylate d'hexyle contenant 2 à 6% en poids d'acrylate d'hexyle.

10. Procédé selon la revendication 9, caractérisé en ce que le copolymère acide acrylique-acrylate d'hexyle contient 4% en poids d'acrylate d'hexyle.

11. Procédé selon l'une quelconque des revendications 1 à 4, caractérisé en ce que le copolymère acide acrylique-acrylate d'alkyle est un copolymère acide acrylique-acrylate de cyclohexyle contenant 4 à 6% en poids d'acrylate de cyclohexyle.

12. Procédé selon la revendication 11, caractérisé en ce que le copolymère acide acrylique-acrylate de cyclohexyle contient 4% en poids d'acrylate de cyclohexyle.

13. Procédé selon la revendication 1, caractérisé en ce que du résorcinol est également présent dans ledit véhicule de fabrication aqueux.

14. Matériau en feuille portant des microcapsules fabriqué par un procédé selon l'une quelconque des revendications précédentes.